# EUROPEAN PATENT SPECIFICATION

(11) **EP 3 237 173 B1**
(45) Date of publication and mention of the grant of the patent: **18.01.2023**
(21) Application number: 15817371.6
(22) Date of filing: 22.12.2015
(51) Int. Cl.: B29C 53/58, B29C 53/84

(54) **PROCESS FOR MANUFACTURING A TUBE OR A VESSEL OF COMPOSITE MATERIAL**
VERFAHREN ZUR HERSTELLUNG EINES ROHRS ODER EINES GEFÄSSES AUS VERBUNDWERKSTOFF
PROCÉDÉ DE FABRICATION D'UN TUBE OU UN RÉCIPIENT DE MATÉRIAU COMPOSITE

(30) Priority: 24.12.2014 EP 14200347
(43) Date of publication of application: 01.11.2017
(73) Proprietor: Shell Internationale Research Maatschappij B.V., 2596 HR The Hague (NL)
(72) Inventor: HONSELAAR, Cornelis Henricus, NL-2381 KG Zoeterwoude (NL); JANSSEN, Franciscus Antonius Henri, 1031 HW Amsterdam (NL)
(74) Representative: Shell Legal Services IP
(86) International application number: PCT/EP2015/081078
(87) International publication number: WO 2016/102618

(56) References cited:
- EP-A1- 2 146 126
- WO-A1-2006/107196
- WO-A1-2014/161753
- WO-A2-2011/129923
- GB-A- 1 588 122
- US-A- 6 158 605

## Description

### Technical field

The present invention relates to process for manufacturing a tube or a vessel of composite material, a tube or a vessel obtainable by the process, the use of the tube in transport or transfer of a cryogenic fluid, and the use of the vessel for storage of a cryogenic fluid.

### Background

Fluid barriers for use under cryogenic conditions such as storage tanks and pipelines are intended to prevent the egress of the cryogenic fluid towards materials behind the barrier. Typically, conventional fluid barriers are based on special materials having similar properties such as nickel-steel or special fibre-reinforced composite materials. Examples of such special fibre-reinforced composite materials include those composed of thermosetting plastic matrix materials (such as epoxy and polyurethanes) reinforced by structural fibres such as graphite, glass, such as S2 glass and E glass, and Ultra High Molecular Weight polyethylene.
As an example, WO 2006/003192 A1 describes the use of a fluid barrier in a thermally insulated container for storing liquefied gas such as LNG (liquefied natural gas), liquefied nitrogen, oxygen or carbon dioxide and liquefied hydrogen. The fluid barrier as disclosed in WO 2006/003192 comprises a plastic material such as polyurethane or epoxy or a combination thereof.

Tubes with a fluid barrier made of a composite material can be manufactured by winding a tape of composite material around a mandrel or a tube liner under application of heat techniques that are based on convection or infra-red so as to adhere the tape on the mandrel or tube liner. Such manufacturing processes have the disadvantage that a considerable amount of heat is stored in the bulk of the composite material, as a result of which the composite material needs to be cooled down between successive windings to prevent that the underlying laminate will be damaged. Hence, such processes have a limited processing speed. In addition, such processes only allow the manufacturing of tubes of limited lengths. Further, the tapes used in known processes are thin and have a small width, affecting the output of a winding cell during the manufacturing process.

Prior art processes are disclosed in GB1588122 and WO2011/129923.

It is an object to provide a process which deals with the above-mentioned disadvantages.

### Summary

A process is provided in which use is made of a particular composite material and heat is used in the form of a laser beam to adhere the tape of the composite material to outside surface of a cylindrical object.

Accordingly, a process for manufacturing a tube or a vessel of composite material is provided, comprising the steps of:
(a) winding a tape of composite material on the outer surface of a cylindrical object under a winding angle with respect to the axial axis of the cylindrical object, in the longitudinal direction of the cylindrical object, and under the application of a laser beam to heat and adhere the tape to the outer surface of the cylindrical object to form a tape layer of parallel and adjacent windings of tape on the cylindrical object;
(b) winding a tape of composite material on the tape layer as formed in step (a) under a winding angle with respect to the axial axis of the cylindrical object, in the longitudinal direction of the cylindrical object, and under the application of a laser beam to heat and adhere the tape to the tape layer as formed in step (a) to form a further tape layer of parallel and adjacent windings of tape on the cylindrical object; and wherein the tape as applied in step (b) is wound on the tape layer as formed in step (a) so as to overlap the edge interface between any two adjacent windings of tape in the tape layer as formed in step (a), thereby forming a fluid tight laminate on the tape layer as formed in step (a); the winding pitch applied in step (a) is the same as the winding pitch applied in step (b); the winding direction in step (a) is the same as the winding direction in step (b); and the composite material comprises a matrix of a thermoplastic material and an oriented thermoplastic material which is incorporated into the matrix of the thermoplastic material.

A process for manufacturing a tube or vessel is provided which is much more efficient in terms of process speed and size of the tape to be used. In addition, the process allows for the manufacturing of endless lengths.

In the context of the present disclosure the term "fluid tight" means that the laminate will be impermeable to fluids to a very high extent. However, the skilled person will appreciate that fluids will always permeate through thermoplastic materials to some, though a very limited extent.

### Detailed description

In steps (a), a tape of composite material is wound on the outer surface of a cylindrical object under a winding angle with respect to the axial axis of the cylindrical object, in the longitudinal direction of the cylindrical object, and under the application of a laser beam to heat and adhere the tape to the outer surface of the cylindrical object to form a tape layer of parallel and adjacent windings of tape on the cylindrical object.

In step (b), a tape of composite material is wound on the tape layer as formed in step (a) under a winding angle with respect to the axial axis of the cylindrical object, in the longitudinal direction of the cylindrical object, and under the application of a laser beam to heat and adhere the tape to the tape layer as formed in step (a) to form a further tape layer of parallel and adjacent windings of tape on the cylindrical object.

The skilled person will understand that the winding angle as applied in step (b) will be equal to the winding angle as applied in step (a), because the winding pitch as applied in step (a) is the same as the winding pitch as applied in step (b).

In the context of the present application the term "winding pitch" means the displacement distance of a single tape wound around the cylindrical object in one full rotation of 360° around the cylindrical object and measured in the axial direction of the cylindrical object.

In order to form the overlap in step (b), an off-set is applied in step (b) in respect of the starting position of the tape placement device to be used in step (b) when compared with the starting position of the tape placement device used in step (a).

The tape placement device in steps (a) and (b) can be the same tape placement device, or in respect of layer to be formed in step (b) or any subsequent layer two or more tape placement devices can be used.

Suitably, the winding angle in both steps (a) and (b) is at least 5°.

The winding angle as applied in steps (a) and (b) is suitable in the range of from 30-65°, preferably in the range of from 35-60°, and more preferably in the range of from 40-60° with respect to the axial axis of the cylindrical object.

Suitably, the cylindrical object is a mandrel on which a first tape layer is applied or a tube liner. The mandrel is preferably made of steel or a similar heat and pressure resistant material. The mandrel may be separated from the wound profile in the form of a tube or a vessel after its final pass through the manufacturing zone. The tube liner may be a tube liner made of for instance a thermoplastic material. The tube liner may also be in the form of already consolidated tape layers.

Preferably, the tape of composite material as used in step (a) and the tape of composite material as used in step (b) have the same width and thickness. Preferably, the tape used in steps (a) and (b) have a width in the range of from 5-100 mm, more preferably in the range of from 7.5-100 mm. Preferably, the thickness of the tape as used in steps (a) and (b) is in the range of from 0.1-5 mm, more preferably in the range of from 0.5-2 mm. This allows the use of a tape which is considerably larger width and thickness when compared with tapes used in conventional processes. In this respect it is observed that in conventional processes the tape has typically a width of 0.5 mm or smaller and a thickness of 0.3 mm. Hence, the present process allows the output of a winding cell to be enhanced significantly.

In step (b), the tape as applied in step (b) is wound on the tape layer as formed in step (a) so as to overlap the edge interface between any two adjacent windings of tape in the tape layer as formed step (a), thereby forming a fluid tight laminate on the tape layer as formed in step (a).

Preferably, the overlap as formed in step (b) on each side of the edge interface between each two adjacent windings of tape in the tape layer as formed in step (a) has a width of at least four times the thickness of the tape as used in step (a).

The edge interface can have the form of a gap between two adjacent windings of tape. In that case the gap may have a width in the range of from 0.1-5 mm.

The edge interface may also be formed by the contact point between two adjacent windings of tape. In the latter case there will be no gap but a line, and the width of the line is close to zero.

When the cylindrical object is a mandrel on which a first tape layer has been applied, the first tape layer on the mandrel has been wound on the mandrel in an opposite direction when compared with the winding direction as applied in step (a).

Preferably, the winding angle applied in step (a) is larger than the winding angle applied to wind the first tape layer on the mandrel.

Preferably, the winding angle applied to wind the first tape on the mandrel is in the range of from 0.1-20° with respect to the axial axis of the mandrel, whereas the winding angle applied in step (a) is suitably in the range of from 30-65°.

Preferably, steps (a) and (b) are repeated after step (b) in the same sequence in the form of steps (c) and (d) to form another fluid tight laminate on the cylindrical object, and the winding direction as applied in steps (c) and (d) is opposite to the winding direction as applied in steps (a) and (b).

The winding pitch as applied in steps (a) and (b) is suitably larger than the width of the tapes as applied in steps (a) and (b).

The composite material to be used has suitably a tensile Young's modulus of less than 50 Gpa at ambient conditions; and a tensile strain at break of at least 5% at ambient conditions. Preferably, the tensile Young's modulus is determined according to DIN EN ISO 527 at ambient conditions, that is standard atmospheric conditions according to ISO 554, in particular the recommended atmospheric conditions i.e. at 23 °C, 50% relative humidity and at a pressure between 86 and 106 kPa.

These properties are determined in accordance with DIN EN ISO 527, which instructs that the test specimen is extended along its major longitudinal axis at a constant speed until the specimen fractures or until the stress (load) or the strain (elongation) reaches some predetermined value. During this procedure, the load sustained by the specimen and the elongation are measured. Thus, it is within the standard that both the modulus and the strain are determined in a single direction. This doesn't exclude the possibility that the material comprises other directions wherein the Young's modulus and/or the tensile strain at break can be different. As long as there is a direction in which the tensile Young's modulus of less than 50 Gpa at ambient conditions and a tensile strain at break of at least 5% at ambient conditions present, the material falls under the above specified properties.

In case the material is a fibre-reinforced material, DIN EN ISO 527 suggests certain directions.

In case the material is an isotropic fibre-reinforced plastic composite the direction in which measurements according to DIN EN ISO 527 are performed is irrelevant, as the material is isotropic and will thus exhibit the same properties in all directions.

In case the material is an orthotropic fibre-reinforced plastic composite, DIN EN ISO 527 defines that measurements are to be done in two directions: the "1"-direction is normally defined in terms of a feature associated with the material structure or the production process, such as the length direction in continuous-sheet processes. The "2"-direction is perpendicular to the "1"-direction. In this case, the feature associated with the material structure will trigger the skilled person to choose the 1-direction to coincide with one direction of the fibres and the 2-direction perpendicular to the 1-direction.

In case the material is an unidirectional fibre-reinforced plastic composites, the DIN EN ISO 527 defines that measurements are to be done in two directions, i.e. direction 1 and 2: the direction parallel to the fibres is defined as the "1"-direction and the direction perpendicular to them (in the plane of the fibres) as the "2"-direction.

However, according to the present disclosure, as long as the above mentioned parameters are found in one direction within the material, the material falls within the mentioned parameters. So, a material having at least one direction with the above parameters fits the concept underlying the present disclosure. By proposing a composite material having a low stiffness and a high elongation at break, this material is allowed to deform such as to prevent the generation of high stress whereby the very strong fibres (such as carbon) can be avoided.

Preferably, the tensile strain at break at ambient conditions is above 8%, more preferably above 10%, and even more preferably above 15%. Typically, the tensile strain at break at ambient conditions is not more than 75%.

The tensile strain at break is determined according to DIN EN ISO 527 at ambient conditions.

The stress of a material is related to its tensile Young's modulus and its coefficient of thermal expansion, and for cryogenic materials, it has hitherto been considered that low stress materials could not be used with cryogenic fluids due to the significant changes in temperatures experienced in use. However, it has surprisingly been found that the use of a composite material having a relatively low tensile Young's modulus is useable with cryogenic fluids. The use of such composite materials reduces the thermally induced stresses on the fluid barrier material as well as on any supporting structure, thereby enabling a wider range of materials to be selected for this supporting structure.

A "composite material" is an engineered material made from two or more constituent materials with different physical or chemical properties and which remain separate and distinct on a macroscopic level within the finished structure. The tensile Young's modulus value of the composite material may depend on the relative amounts of the materials used. The person skilled in the art will readily understand how to vary the volume fractions of the various components of the composite material to tailor the desired properties.

In one embodiment, the composite material is a mono-material composite, i.e. a composite material formed from two layers comprising the same material, for example two layers of oriented thermoplastic material that are fused together at elevated temperature and pressure, thus forming thermoplastic matrix material interdispersed between and in the layers of oriented thermoplastic material. As is known by those skilled in the art, elevated pressure, in particular hydrostatic pressure, is important to control the melting temperature of the oriented thermoplastic material. Furthermore, in the mono-material composite material one or more additives may also be incorporated being chemically different. The composite material is a thermoplastic matrix material reinforced by a reinforcer, preferably where the reinforcer is at least partially incorporated into the thermoplastic matrix material. The thermoplastic matrix material may thus function as a continuous solid phase in which the reinforcer is embedded. There are no specific limitations with respect to the ratio of thermoplastic matrix material and reinforcer. The reinforcer may be in the form of chopped or continuous fibres, flakes or particles, but is preferably transformed into a material having a textile-like structure, such as felt, woven, roving, fabric, knit or stitched structure. Further it is preferred that the reinforcer is selected from the group consisting of natural and thermoplastic materials or a combination thereof. The natural material may comprise fibres including vegetable fibres such as coir, cotton, linen, jute, flax, ramie, sisal and hemp; and animal fibres such as sheep wool, horse hair, and silk.

Preferably the reinforcer comprises a thermoplastic material. Preferably the thermoplastic material for the reinforcer comprises a polyolefin selected from the group consisting of polyethylene, polypropylene, polybutylene, polymethylpentene, polyisobutene or a copolymer or terpolymer thereof, preferably polypropylene.

The reinforcer can also be selected from a broad range of materials including carbon fibres, glass fibres, and polymeric fibres as long as the resulting composite material has a tensile Young's modulus of less than 50 Gpa and a tensile strain at break of at least 5%.

Preferably, the reinforcer has a tensile strain at break of at least 5% as determined according to DIN EN ISO 527 at ambient conditions, more preferably the tensile strain at break at ambient conditions is above 8%, even more preferably above 10%, and most preferably above 15%. Typically, the tensile strain at break at ambient conditions is not more than 75%.

The thermoplastic matrix material to be used can be selected from a broad range of materials such as polymer materials including polyester, polycarbonate, vinyl ester, epoxy, phenolic, polyimide, polyamide and others, as long as the resulting composite material has a tensile Young's modulus of less than 50 GPa. However, it is preferred that the plastic matrix material has a tensile Young's modulus of 0.1- 5.0 GPa as determined according to DIN EN ISO 527 at ambient conditions.

An advantage of the thermoplastic material to be used is that it can be easily shaped. Preferably, the thermoplastic material comprises a polyolefin selected from the group consisting of polyethylene, polypropylene, polybutylene, polymethylpentene, polyisobutene or a copolymer or terpolymer thereof, such as EPDM, preferably polypropylene.

The thermoplastic matrix material is preferably a thermoplastic material, in which both an oriented thermoplastic material, such as a reinforcing fibrous phase, and a matrix between the oriented thermoplastic material, comprises, preferably consists essentially of, more preferably consists of, the same thermoplastic polymer. Bonding is achieved due to controlled surface melting of the oriented thermoplastic material. The physical properties of the thermoplastic matrix material, such as tensile Young's modulus and coefficient of thermal expansion (CTE), can be controlled by the extent of melting effected in the process, which determines the oriented/not oriented thermoplastic material volumetric ratio, also referred to as the fibre/matrix ratio. The way to manufacture these mono-material composites is known in the art and has for example been disclosed in US patent application publication No. 2005/0064163; B. Alcock et al. (2007), Journal of Applied Polymer Science, Vol. 104, 118-129; and B. Alcock et al . (2007), Composites: Part A (applied science and manufacturing), Vol. 38, 147-161.

The manufacturing process typically utilizes oriented thermoplastic polymer fibres in various forms: unidirectional lay-up, woven fabric or chopped fibres/non-woven felt. As is known in the art, it is important to control the fibres' melting temperature by hydrostatic pressure. The fibres are heated under elevated pressure to a temperature that is below their melting point at the elevated pressure but above the melting temperature at a lower pressure. Reduction of pressure for controlled time results in melting of the fibres, which starts at the fibre surface. This surface melting under controlled pressure followed by crystallization produces the consolidated structure. An alternative known process involves the use of a special co extrusion of matrix material around oriented thermoplastic material strands, such as fibres. This process of co-extrusion and tape welding has advantages over the conventional sealing processes because of the large sealing window (130-180 °C) without loss of material properties.

Preferably, the thermoplastic material comprises, more preferably consists essentially of, even more preferably consists of, a polyolefin selected from the group consisting of polyethylene, polypropylene, polybutylene, polymethylpentene, polyisobutene or a copolymer or terpolymer thereof, such as EPDM, more preferably polypropylene.

The composite material is to be used as a fluid barrier under cryogenic conditions, which means below -30 °C, more preferably at temperatures below -100 °C, or even below -150 °C. Such a temperature (below -100 °C, preferably below -150 °C, typically, -160 °C) is suitable for liquefied natural gas (LNG).

Preferably, the composite material has a tensile strain at break of at least 3% as determined according to DIN EN ISO 527 at -196 °C (in fluid nitrogen), more preferably at least 5%, even more preferably at least 6%, even more preferably above 8%, even more preferably above 10%. The composite material preferably has a coefficient of thermal expansion less than 250 * 10⁻⁶ m/m/°C at 40 °C. More preferably, the composite material is oriented and the composite material has a coefficient of thermal expansion less than 250 * 10⁻⁶ m/m/°C at 40 °C in the direction of the orientation of the composite material.

Further, preferably, the composite material has a coefficient of thermal expansion less than 100 * 10⁻⁶ m/m/°C at -60 °C. More preferably, the composite material is oriented and the composite material has a coefficient of thermal expansion less than 100 * 10⁻⁶ m/m/°C at -60 °C in the direction of the orientation of the composite material.

The coefficient of thermal expansion can suitably be determined according to ISO11359-2 in the temperature range between -60 and +70 °C by thermal mechanical analysis (TMA).

Preferably, both the upper surface of the tape layer formed in step (a) and the bottom surface of the tape as used in step (b) are heated by the laser beam at or near the location where the tape as used in step (b) is adhered to the tape layer formed in step (a).

Preferably, the composite material as used in step (a) is the same as the composite material as used in step (b) .

In an embodiment, the tape of composite material as used in step (a) and the tape of composite material as used in step (b) comprise a non-coloured core and two coloured outer layers. This embodiment has the advantage that less heat is required to adhere the tape layers on each other, as a result of which the original properties of the composite material are better retained.

Preferably, the two coloured outer layers have a thickness in the range of from 0.015-0.1 mm, more preferably in the range of from 0.035-0.075 mm.

Preferably, the laser beam emits electromagnetic radiation at a wavelength of between 360 and 480 nanometres.

In one embodiment, during steps (a) and (b) the cylindrical object is translated through a manufacturing zone.

The process can be carried in a continuous manner. In such a continuous process a string of mandrel or tube liner parts can suitably be actuated to move axially in a one way motion through one or more orbital winding stations that are rotationally disposed about to the longitudinal axis of the mandrel or tube liner in one or more passes. In one or more of the winding stations tape will be wound onto the mandrel or tube line parts to form a number of tape layers on the mandrel or tube liner parts, resulting in a fluid tight laminate.

The mandrel or tube liner part may be separated from the wound laminate on the mandrel or tube liner part after its final pass, e.g. after it has been cut to length. The mandrel or tube liner part may be fed back to pass though the one or more winding stations again.

The string of mandrel sections may comprise a string of axially aligned, abutting mandrel sections. The layers wound in a pass are, at the location of a break between abutting sections, cut using a cutter, and the mandrel sections may be looped back to be passed through the one or more winding stations again. The string of mandrel sections can be moved in various ways through the one or more winding stations. Preferably, the mandrel or tube liner parts are pushed through the one or more winding stations. The mandrel or tube liner parts in the string may interlock, and may at the location of a break be provided with a recess to accommodate a cutter. The cutter may be arranged downstream of the winding stations. Preferably, the cutter is arranged to travel with the moving section while cutting.

In each step of the present process tape will be adhered to the outer surface of the cylindrical object or an earlier tape layer formed on the cylindrical object. Suitably, this is established under application of a laser beam together with application of pressure. In this way, consolidation is achieved and the respective layers are adhered to each other and a fluid tight laminate is formed. A suitable winding apparatus which can be used for this purpose is described in WO2006/107196.

The mandrel or tube line parts may have varying cross-section. They can for instance be conical.

The one or more winding stations to be used can suitably be orbital winding stations. Orbital winding stations are winding stations that are rotationally disposed about to the longitudinal axis of the mandrel or tube liner part. The winding stations are arranged to continuously wind tape on the mandrel or tube liner part. The winding is continuous in that it need not reverse, and thus need not stop to reverse.

The mandrel or tube liner parts are fed back to be passed through the one or more winding stations until the total number of tape layers has reached the desired thickness.

Tubes with continuous tube lengths can be manufactured. The tube lengths can be more than 20 meter, preferably more than 50 meter, or even a length of 1000 m or more.

Suitably, use will be made of an apparatus for providing the tape that comprises a tape placement device, a pressure device and a laser beam device. Suitably, tape placement device is provided with the pressure device which is arranged in such a way as to be rotatable about the longitudinal axis of the mandrel or tube liner part. The pressure devices ensures that tape applies and adheres to the outer surface of the mandrel or tube part or each tape layer formed under radial pressing force.

The apparatus for providing the tape comprise two or more tape placement devices which each may be provided with a pressure device. In this way, two or more taps can at the same time be wounded in parallel around the mandrel or tube liner part. In that case, the two or more tapes are then applied on the outer surface of the mandrel or tube liner part or any subsequent tape layer under application of the same winding angle.

A major advantage of the present process is that the tape layer will only be heated where the tape is to be adhered to the tape layer.

In another embodiment, a tape placement device and a laser beam device, suitably as part of a device that provides the tape, are moved in the longitudinal direction of the cylindrical object during steps (a) and (b) and the cylindrical object remains in place and is rotating around the longitudinal axis of the cylindrical object.

The cylindrical object has suitably a limited length and contains end caps. In this way, the present process allows for the manufacturing of vessels.

In the present process the cylindrical object can suitably rotate around its longitudinal axis and around at least one of its orthogonal axes.

Further provided is a tube of composite material obtainable with a process as described above. Further provided is the use of the tube of composite material in transport or transfer of a cryogenic fluid.

Further provided is a vessel of composite material obtainable with a process as described above. Further provided is the use of the vessel of composite material for storage of a cryogenic fluid.

For the purposes of the present application a cryogenic fluid is a liquefied gas that has been liquefied by lowering the temperature to cryogenic conditions. A cryogenic fluid includes a cryogenic fluid, a gas that is kept under cryogenic conditions and a supercritical fluid that is kept under cryogenic conditions.

The laminate formed on the cylindrical object forms a fluid barrier and can suitably be used as a barrier for cryogenic fluids. Cryogenic conditions for the purposes of this specification mean temperatures less than -30 °C, preferably less than -100 °C, more preferably less than - 150 °C. The composite material is preferably used at temperatures less than -100 °C, more preferably less than -150 °C because in that way the benefits of using composite materials with these properties are fully exploited.

In another aspect, the use of a tube or vessel in the containment, storage, processing, transport or transfer of a cryogenic fluid, such as a liquefied gas, including but not limited to LNG, liquefied nitrogen, oxygen, carbon dioxide and hydrogen is provided. Such use can be temporary or permanent, onshore or off-shore, above ground, above water, under water or underground, or a combination thereof. Such uses can also be up-stream and/or downstream of other apparatus, devices, units or systems of any part of a plant or facility for containing, storing, processing, transporting and/or transferring a cryogenic fluid. This includes one or more of a liquefaction plant, an export, loading, transport, unloading, import or end-use facility, or a part thereof. Such uses include but are not limited to the following applications;

Storage and transportation of cryogenic fluids (pure or blended) for the use at temperatures below -30 °C, preferably at temperatures below -100 °C, more preferably at temperatures below -150 °C including tanks (i.e. bulk storage) at export and import terminals, shipping, and transfer elements such as pipes and hoses; the containment of cryogenic fluids in onshore and offshore vessels; the onshore and offshore storage or transportation of cryogenic fluids in vessels or tubes; pressurized or non-pressurized vessels for the temporary or permanent storage of cryogenic fluids; pressurized or non-pressurized vessels for the transport (on land, by sea or air by any means) of cryogenic fluids; and flowing transport or transfer in flexible or rigid tubes including onshore and offshore, above water, in water or underwater, including pipes, pipe sections, pipelines, piping systems, hoses, risers and associated equipment and detailing.

## Claims

1. Process for manufacturing a tube or a vessel of composite material comprising the steps of:
(a) winding a first tape of composite material on the outer surface of a cylindrical object under a winding angle with respect to the axial axis of the cylindrical object, in the longitudinal direction of the cylindrical object, and under the application of a laser beam to heat and adhere the first tape to the outer surface of the cylindrical object to form a first tape layer of parallel and adjacent windings of first tape on the cylindrical object;
(b) winding a second tape of composite material on the first tape layer as formed in step (a) under a winding angle with respect to the axial axis of the cylindrical object, in the longitudinal direction of the cylindrical object, and under the application of a laser beam to heat and adhere the second tape to the first tape layer as formed in step (a) to form a second tape layer of parallel and adjacent windings of second tape on the cylindrical object; and
wherein the second tape as applied in step (b) is wound on the first tape layer as formed in step (a) so as to overlap the edge interface between any two adjacent windings of first tape in the first tape layer as formed in step (a), thereby forming a fluid tight laminate on the first tape layer as formed in step (a);
the winding pitch applied in step (a) is the same as the winding pitch applied in step (b);
the winding direction in step (a) is the same as the winding direction in step (b); and
the composite material comprises a matrix of a thermoplastic material and an oriented thermoplastic material which is incorporated into the matrix of the thermoplastic material.

2. The process according to claim 1,
wherein the matrix of a thermoplastic material and the oriented thermoplastic material which is incorporated into the matrix of the thermoplastic material are made of the same thermoplastic material, and
wherein bonding is achieved due to controlled surface melting of the oriented thermoplastic material.

3. The process according to claim 1 or 2, comprising:
controlling the melting temperature of fibres in the oriented thermoplastic material by hydrostatic pressure;
the step of application of a laser beam comprising heating the fibres under elevated pressure to a temperature that is below their melting point at the elevated pressure but above the melting temperature at a lower pressure;
reducing the pressure for a controlled time resulting in melting of the fibres, which starts at the fibre surface; and
the surface melting under controlled pressure is followed by crystallization producing a consolidated structure.

4. Process according to claim 1, wherein the cylindrical object is a mandrel on which the first tape layer is applied or a tube liner.

5. Process according to any of claims 1-4 , wherein the winding angle in both steps (a) and (b) is at least 5°.

6. Process according to any one of claims 1-5, wherein the first tape of composite material as used in step (a) and the second tape of composite material as used in step (b) have the same width and thickness.

7. Process according to any one of claims 1-6, wherein the overlap as formed in step (b) on each side of the edge interface between each two adjacent windings of tape in the first tape layer as formed in step (a) has a width of at least four times the thickness of the second tape as used in step (a).

8. Process according to any one of claims 4-7,
wherein the first tape layer on the mandrel has been wound on the mandrel in an opposite direction when compared with the winding direction as applied in step (a); and/or
wherein the winding angle applied in step (a) is larger than the winding angle applied to wind the first tape layer on the mandrel; and/or
wherein the winding angle as applied in step (a) is in the range of from 30-65° with respect to the axial axis of the cylindrical object; and/or wherein the winding angle applied to wind the first tape on the mandrel is in the range of from 0.1-20° with respect to the axial axis of the mandrel.

9. Process according to any one of claims 1-8, wherein steps (a) and (b) are repeated after step (b) in the same sequence in the form of steps (c) and (d) to form another fluid tight laminate on the cylindrical object, and the winding direction as applied in steps (c) and (d) is opposite to the winding direction as applied in steps (a) and (b).

10. Process according to any one of claims 1-9, wherein the first tape of composite material as used in step (a) and the second tape of composite material as used in step (b) have a width in the range of 5-100 mm and a thickness in the range of 0.1-5 mm.

11. Process according to any one of claims 1-10, wherein the winding pitch as applied in steps (a) and (b) is larger than the width of the tapes as applied in steps (a) and (b).

12. Process according to any one of claims 1-11, wherein the composite material of which the first tape as used in step (a) and the second tape as used in step (b) are made has a woven structure.

13. Process according to any one of claims 1-12, wherein both the upper surface of the first tape layer formed in step (a) and the bottom surface of the second tape as used in step (b) are heated by the laser beam at or near the location where the second tape as used in step (b) is adhered to the first tape layer formed in step (a).

14. Process according to any one of claims 1-13, wherein the thermoplastic material comprises an polyolefin selected from the group consisting of polyethylene, polypropylene, polybutylene, polymethylpentene, polyisobutene or a copolymer or terpolymer thereof, and polyester.

15. Process according to any one of claims 1-14, wherein the first tape of composite material as used in step (a) and the second tape of composite material as used in step (b) comprise a non-coloured core and two coloured outer layers, wherein the two coloured outer layers have a thickness in the range of from 0.015-0.1 mm.

16. Process according to any one of claims 1-15, wherein the laser beam emits electromagnetic radiation at a wavelength of between 360 and 480 nanometres.

17. Use of a tube or vessel of composite material obtained with a process according to any one of claims 1-16 in transport, transfer or storage of a cryogenic fluid.

## Patentansprüche

1. Verfahren zum Anfertigen eines Rohres oder eines Gefäßes aus Verbundwerkstoff, umfassend die Schritte:
(a) Wickeln eines ersten Bandes aus Verbundwerkstoff auf die äußere Oberfläche eines zylindrischen Objektes unter einem Wickelwinkel hinsichtlich der axialen Achse des zylindrischen Objektes, in der Längsrichtung des zylindrischen Objektes, und unter der Aufbringung eines Laserstrahles, um das erste Band zu erwärmen und an die äußere Oberfläche des zylindrischen Objektes zu haften, um eine erste Bandschicht aus parallelen und angrenzenden Wicklungen des ersten Bandes auf dem zylindrischen Objekt auszubilden;
(b) Wickeln eines zweiten Bandes aus Verbundwerkstoff auf die erste Bandschicht, wie in Schritt (a) ausgebildet, unter einem Wickelwinkel hinsichtlich der axialen Achse des zylindrischen Objektes, in der Längsrichtung des zylindrischen Objektes, und unter der Aufbringung eines Laserstrahles, um das zweite Band zu erwärmen und an die erste Bandschicht, wie in Schritt (a) ausgebildet, zu haften, um eine zweite Bandschicht aus parallelen und angrenzenden Wicklungen des zweiten Bandes auf dem zylindrischen Objekt auszubilden; und
wobei das zweite Band, wie in Schritt (b) aufgebracht, auf die erste Bandschicht, wie in Schritt (a) ausgebildet, gewickelt wird, um die Kantengrenzfläche zwischen zwei beliebigen angrenzenden Wicklungen des ersten Bandes in der ersten Bandschicht, wie in Schritt (a) ausgebildet, zu überlappen, wobei dadurch ein fluiddichtes Laminat auf der ersten Bandschicht, wie in Schritt (a) ausgebildet, ausgebildet wird;
die Wickelsteigung, die in Schritt (a) aufgebracht wird, die gleiche wie die Wickelsteigung, die in Schritt (b) aufgebracht wird, ist;
die Wickelrichtung in Schritt (a) die gleiche wie die Wickelrichtung in Schritt (b) ist; und
der Verbundwerkstoff eine Matrix aus einem thermoplastischen Werkstoff und einen orientierten thermoplastischen Werkstoff, der in die Matrix des thermoplastischen Werkstoffes eingearbeitet ist, umfasst.

2. Verfahren nach Anspruch 1,
wobei die Matrix aus einem thermoplastischen Werkstoff und der orientierte thermoplastische Werkstoff, der in die Matrix des thermoplastischen Werkstoffes eingearbeitet ist, aus dem gleichen thermoplastischen Werkstoff hergestellt sind und wobei eine Verbindung infolge von kontrolliertem Oberflächenschmelzen des orientierten thermoplastischen Werkstoffes erreicht wird.

3. Verfahren nach Anspruch 1 oder 2, umfassend:
Kontrollieren der Schmelztemperatur von Fasern in dem orientieren thermoplastischen Werkstoff durch hydrostatischen Druck;
den Schritt der Aufbringung eines Laserstrahls, umfassend ein Erwärmen der Fasern unter erhöhtem Druck auf eine Temperatur, die unter ihrem Schmelzpunkt bei dem erhöhten Druck, aber über der Schmelztemperatur bei einem niedrigeren Druck ist;
Reduzieren des Drucks für eine kontrollierte Zeit, das zu einem Schmelzen der Fasern, die an der Faseroberfläche beginnt, führt; und
dem Oberflächenschmelzen unter kontrolliertem Druck eine Kristallisation, die eine verfestigte Struktur erzeugt, folgt.

4. Verfahren nach Anspruch 1, wobei das zylindrische Objekt ein Dorn, auf dem die erste Bandschicht aufgebracht ist, oder eine Rohrauskleidung ist.

5. Verfahren nach einem der Ansprüche 1 bis 4, wobei der Wickelwinkel in sowohl Schritt (a) als auch Schritt (b) mindestens 5° ist.

6. Verfahren nach einem der Ansprüche 1 bis 5, wobei das erste Band aus Verbundwerkstoff, wie in Schritt (a) verwendet, und das zweite Band aus Verbundwerkstoff, wie in Schritt (b) verwendet, die gleiche Breite und Dicke aufweisen.

7. Verfahren nach einem der Ansprüche 1 bis 6, wobei die Überlappung, wie in Schritt (b) ausgebildet, auf jeder Seite der Kantengrenzfläche zwischen jeden zwei angrenzenden Wicklungen des Bandes in der ersten Bandschicht, wie in Schritt (a) ausgebildet, eine Breite von mindestens viermal der Dicke des zweiten Bandes, wie in Schritt (a) verwendet, aufweist.

8. Verfahren nach einem der Ansprüche 4 bis 7, wobei die erste Bandschicht auf dem Dorn in einer entgegengesetzten Richtung, wenn mit der Wickelrichtung, wie in Schritt (a) aufgebracht, verglichen, auf den Dorn gewickelt wurde; und/oder wobei der Wickelwinkel, der in Schritt (a) aufgebracht wird, größer als der Wickelwinkel, der aufgebracht wird, um die erste Bandschicht auf den Dorn zu wickeln, ist; und/oder
wobei der Wickelwinkel, wie in Schritt (a) aufgebracht, in dem Bereich von 30-65° hinsichtlich der axialen Achse des zylindrischen Objektes ist;
und/oder wobei der Wickelwinkel, der aufgebracht wird, um das erste Band auf den Dorn zu wickeln, in dem Bereich von 0,1-20° hinsichtlich der axialen Achse des Dornes ist.

9. Verfahren nach einem der Ansprüche 1 bis 8, wobei Schritte (a) und (b) nach Schritt (b) in der gleichen Reihenfolge in der Form von Schritten (c) und (d) wiederholt werden, um ein anderes fluiddichtes Laminat auf dem zylindrischen Objekt auszubilden und die Wickelrichtung, wie in Schritten (c) und (d) aufgebracht, der Wickelrichtung, wie in Schritten (a) und (b) aufgebracht, entgegengesetzt ist.

10. Verfahren nach einem der Ansprüche 1 bis 9, wobei das erste Band aus Verbundwerkstoff, wie in Schritt
(a) verwendet, und das zweite Band aus Verbundwerkstoff, wie in Schritt (b) verwendet, eine Breite in dem Bereich von 5-100 mm und eine Dicke in dem Bereich von 0,1-5 mm aufweisen.

11. Verfahren nach einem der Ansprüche 1 bis 10, wobei die Wickelsteigung, wie in Schritten (a) und (b) aufgebracht, größer als die Breite der Bänder, wie in Schritten (a) und (b) aufgebracht, ist.

12. Verfahren nach einem der Ansprüche 1 bis 11, wobei der Verbundwerkstoff, aus dem das erste Band, wie in Schritt (a) verwendet, und das zweite Band, wie in Schritt (b) verwendet, hergestellt werden, eine gewebte Struktur aufweist.

13. Verfahren nach einem der Ansprüche 1 bis 12, wobei sowohl die obere Oberfläche der ersten Bandschicht, die in Schritt (a) ausgebildet wird, als auch die untere Oberfläche des zweiten Bandes, wie in Schritt (b) verwendet, durch den Laserstrahl an oder nahe der Stelle, wo das zweite Band, wie in Schritt (b) verwendet, an die erste Bandschicht, die in Schritt (a) ausgebildet wird, gehaftet wird, erwärmt werden.

14. Verfahren nach einem der Ansprüche 1 bis 13, wobei der thermoplastische Werkstoff ein Polyolefin, das aus der Gruppe ausgewählt ist, bestehend aus Polyethylen, Polypropylen, Polybutylen, Polymethylpenten, Polyisobuten oder einem Copolymer oder Terpolymer davon und Polyester umfasst.

15. Verfahren nach einem der Ansprüche 1 bis 14, wobei das erste Band aus Verbundwerkstoff, wie in Schritt (a) verwendet, und das zweite Band aus Verbundwerkstoff, wie in Schritt (b) verwendet, einen nicht farbigen Kern und zwei farbige äußere Schichten umfasst, wobei die zwei farbigen äußeren Schichten eine Dicke in dem Bereich von 0,015-0,1 mm aufweisen.

16. Verfahren nach einem der Ansprüche 1 bis 15, wobei der Laserstrahl elektromagnetische Strahlung bei einer Wellenlänge zwischen 360 und 480 Nanometern emittiert.

17. Verwendung eines Rohres oder Gefäßes aus Verbundwerkstoff, das mit einem Verfahren nach einem der Ansprüche 1 bis 16 erhalten wird, in einem Transport, einer Versetzung oder einer Lagerung eines kryogenen Fluides.

## Revendications

1. Procédé de fabrication d'un tube ou d'un contenant de matériau composite comprenant les étapes suivantes :
(a) l'enroulement d'une première bande de matériau composite sur la surface externe d'un objet cylindrique sous un angle d'enroulement par rapport à l'axe axial de l'objet cylindrique, dans la direction longitudinale de l'objet cylindrique, et sous l'application d'un faisceau laser pour chauffer et faire adhérer la première bande à la surface externe de l'objet cylindrique pour former une première couche de bande d'enroulements parallèles et adjacents de première bande sur l'objet cylindrique ;
(b) l'enroulement d'une seconde bande de matériau composite sur la première couche de bande telle que formée à l'étape (a) sous un angle d'enroulement par rapport à l'axe axial de l'objet cylindrique, dans la direction longitudinale de l'objet cylindrique, et sous l'application d'un faisceau laser pour chauffer et faire adhérer la seconde bande à la première couche de bande telle que formée à l'étape (a) pour former une seconde couche de bande d'enroulements parallèles et adjacents de seconde bande sur l'objet cylindrique ; et dans lequel la seconde bande telle qu'appliquée à l'étape (b) est enroulée sur la première couche de bande telle que formée à l'étape (a) de manière à chevaucher l'interface de bord entre deux enroulements adjacents quelconques de la première bande dans la première couche de bande telle que formée à l'étape (a), formant ainsi un stratifié étanche aux fluides sur la première couche de bande telle que formée à l'étape (a) ;
le pas d'enroulement appliqué à l'étape (a) est le même que le pas d'enroulement appliqué à l'étape (b) ;
la direction d'enroulement à l'étape (a) est la même que la direction d'enroulement à l'étape (b) ; et
le matériau composite comprend une matrice d'un matériau thermoplastique et un matériau thermoplastique orienté qui est incorporé dans la matrice du matériau thermoplastique.

2. Procédé selon la revendication 1,
dans lequel la matrice d'un matériau thermoplastique et le matériau thermoplastique orienté qui est incorporé dans la matrice du matériau thermoplastique sont constitués du même matériau thermoplastique, et
dans lequel la liaison est obtenue en raison de la fusion de surface contrôlée du matériau thermoplastique orienté.

3. Procédé selon la revendication 1 ou 2, comprenant :
le contrôle de la température de fusion des fibres dans le matériau thermoplastique orienté par pression hydrostatique ;
l'étape d'application d'un faisceau laser comprenant le chauffage des fibres sous pression élevée à une température qui est inférieure à leur point de fusion à la pression élevée mais supérieure à la température de fusion à une pression inférieure ;
la réduction de la pression pendant un temps contrôlé résultant en la fusion des fibres, qui commence au niveau de la surface de la fibre ; et
la fusion de surface sous pression contrôlée est suivie d'une cristallisation produisant une structure consolidée.

4. Procédé selon la revendication 1, dans lequel l'objet cylindrique est un mandrin sur lequel la première couche de bande est appliquée ou un revêtement de tube.

5. Procédé selon l'une quelconque des revendications 1 à 4, dans lequel l'angle d'enroulement dans les deux étapes (a) et (b) est d'au moins 5°.

6. Procédé selon l'une quelconque des revendications 1 à 5, dans lequel la première bande de matériau composite telle qu'utilisée à l'étape (a) et la seconde bande de matériau composite telle qu'utilisée à l'étape (b) ont la même largeur et épaisseur.

7. Procédé selon l'une quelconque des revendications 1 à 6, dans lequel le chevauchement tel que formé à l'étape (b) de chaque côté de l'interface de bord entre chaque deux enroulements adjacents de bande dans la première couche de bande telle que formée à l'étape (a) a une largeur d'au moins quatre fois l'épaisseur de la seconde bande telle qu'utilisée à l'étape (a).

8. Procédé selon l'une quelconque des revendications 4 à 7,
dans lequel la première couche de bande sur le mandrin a été enroulée sur le mandrin dans une direction opposée lorsqu'elle est comparée à la direction d'enroulement telle qu'appliquée à l'étape (a) ; et/ou dans lequel l'angle d'enroulement appliqué à l'étape (a) est plus grand que l'angle d'enroulement appliqué pour enrouler la première couche de bande sur le mandrin ; et/ou
dans lequel l'angle d'enroulement tel qu'appliqué à l'étape (a) est dans la plage de 30 à 65° par rapport à l'axe axial de l'objet cylindrique ; et/ou dans lequel l'angle d'enroulement appliqué pour enrouler la première bande sur le mandrin est dans la plage de 0,1 à 20° par rapport à l'axe axial du mandrin.

9. Procédé selon l'une quelconque des revendications 1 à 8, dans lequel les étapes (a) et (b) sont répétées après l'étape (b) dans la même séquence sous la forme des étapes (c) et (d) pour former un autre stratifié étanche aux fluides sur l'objet cylindrique, et la direction d'enroulement telle qu'appliquée aux étapes (c) et (d) est opposée à la direction d'enroulement telle qu'appliquée aux étapes (a) et (b).

10. Procédé selon l'une quelconque des revendications 1 à 9, dans lequel la première bande de matériau composite telle qu'utilisée à l'étape (a) et la seconde bande de matériau composite telle qu'utilisée à l'étape (b) ont une largeur dans la plage de 5 à 100 mm et une épaisseur dans la plage de 0,1 à 5 mm.

11. Procédé selon l'une quelconque des revendications 1 à 10, dans lequel le pas d'enroulement tel qu'appliqué aux étapes (a) et (b) est plus grand que la largeur des bandes telle qu'appliquée aux étapes (a) et (b) .

12. Procédé selon l'une quelconque des revendications 1 à 11, dans lequel le matériau composite duquel la première bande telle qu'utilisée à l'étape (a) et la seconde bande telle qu'utilisée à l'étape (b) sont constituées a une structure tissée.

13. Procédé selon l'une quelconque des revendications 1 à 12,
dans lequel à la fois la surface supérieure de la première couche de bande formée à l'étape (a) et la surface inférieure de la seconde bande telle qu'utilisée à l'étape (b) sont chauffées par le faisceau laser au niveau ou près de l'emplacement où la seconde bande telle qu'utilisée à l'étape (b) est fixée par adhérence à la première couche de bande formée à l'étape (a).

14. Procédé selon l'une quelconque des revendications 1 à 13,
dans lequel le matériau thermoplastique comprend une polyoléfine choisie dans le groupe constitué de polyéthylène, polypropylène, polybutylène, polyméthylpentène, polyisobutène ou un copolymère ou terpolymère de ceux-ci, et de polyester.

15. Procédé selon l'une quelconque des revendications 1 à 14,
dans lequel la première bande de matériau composite telle qu'utilisée à l'étape (a) et la seconde bande de matériau composite telle qu'utilisée à l'étape (b) comprennent un noyau non coloré et deux couches externes colorées, dans lequel les deux couches externes colorées ont une épaisseur dans la plage allant de 0,015 à 0,1 mm.

16. Procédé selon l'une quelconque des revendications 1 à 15, dans lequel le faisceau laser émet un rayonnement électromagnétique à une longueur d'onde comprise entre 360 et 480 nanomètres.

17. Utilisation d'un tube ou d'un contenant de matériau composite obtenu avec un procédé selon l'une quelconque des revendications 1 à 16 dans le transport, le transfert ou le stockage d'un fluide cryogénique.
